# FASCICULE DE BREVET EUROPEEN

(11) **EP 1 308 601 B1**
(45) Date de publication et mention de la délivrance du brevet: **28.04.2004**
(21) Numéro de dépôt: 02292632.3
(22) Date de dépôt: 24.10.2002
(51) Int. Cl.: F01D 9/06

(54) **Dispositif de décharge dans un turboréacteur à double flux**
Abblasvorrichtung eines Bläsertriebwerks
Bleed device for a turbofan

(30) Priorité: 31.10.2001 FR 0114097
(43) Date de publication de la demande: 07.05.2003
(73) Titulaire: Snecma Moteurs, 75015 Paris (FR)
(72) Inventeur: Beutin Bruno, 91100 Corbeil Essonnes (FR); Brault Michel, Gilbert, Roland, 91800- Boussy Saint-Antoine (FR); Thore Monique, Andrée, 91560 Crosne (FR); Gervais Pascal, Gérard, 77350 Boissise La Bertrand (FR)

(56) Documents cités:
- EP-A- 0 539 285
- EP-A- 0 902 179
- US-A- 4 086 761
- US-A- 5 123 240
- US-A- 5 269 135

## Description

L'invention concerne le domaine des turboréacteurs d'aviation à double flux.

Elle concerne plus précisément un turboréacteur à double flux comportant entre la veine primaire et la veine secondaire un carter intermédiaire structural disposé axialement entre un compresseur à basse pression et un compresseur à haute pression, et des moyens de décharge permettant la dérivation d'une partie du flux gazeux délivré par le compresseur à basse pression vers la veine secondaire, ledit carter intermédiaire étant équipé à sa périphérie d'une pluralité de bras de support présentant des plates-formes qui délimitent extérieurement la veine secondaire.

Le carter intermédiaire présente également dans sa partie radialement interne une pluralité de bras radiaux reliant les parois annulaires délimitant intérieurement et extérieurement la veine primaire. Ces bras radiaux sont destinés à transmettre aux bras de support via la partie radialement externe du carter intermédiaire les efforts exercés par la soufflante et le compresseur à basse pression sur leurs paliers, ces paliers étant portés par des viroles solidaires de la paroi annulaire interne du carter intermédiaire.

De plus, le carter intermédiaire porte en général le dispositif d'entraînement des équipements du turboréacteur.

Le carter intermédiaire doit présenter une grande résistance mécanique, tout en restant léger, notamment dans le cas d'un turboréacteur. Ce carter intermédiaire est en général réalisé en une seule pièce en fonderie ou en mécano soudé.

Dans un turboréacteur à double flux et à grand taux de dilution, il est prévu dans le flux primaire d'amont en aval dans le sens de l'écoulement des gaz, un compresseur à basse pression, suivi d'un compresseur à haute pression qui amène de l'air comprimé à une chambre de combustion dans laquelle l'air est mélangé à du carburant sous pression que l'on brûle pour donner en aval de la chambre de l'énergie à une turbine à haute pression entraînant le compresseur à haute pression, puis à une turbine à basse pression entraînant la soufflante et le compresseur à basse pression. Les gaz en sortie des turbines fournissent une poussée résiduelle qui s'ajoute à la poussée générée par les gaz circulant dans la veine secondaire, ces poussées étant nécessaires pour la propulsion de l'aéronef.

Dans certaines conditions de vol, à charge partielle par exemple, lors de la phase de descente de l'aéronef, la quantité d'air délivrée par le compresseur à basse pression peut être trop élevée pour le fonctionnement correct du moteur, aussi est-il nécessaire de dévier une partie de cet air vers la veine secondaire, pour éviter l'apparition du phénomène dit de pompage dû au décollement des filets fluides le long des aubes, ce qui entraîne une instabilité de l'écoulement.

En outre, lorsque l'aéronef traverse des nuages de grand volume, des quantités d'eau sous forme de pluies ou de grêle peuvent alors pénétrer dans les compresseurs. Si le moteur est en régime de plein gaz, l'eau est vaporisée et est à un état de vapeur suffisamment chaude et pulvérisée pour ne pas provoquer l'extinction de la chambre de combustion qui est alimentée par un débit important de carburant. En revanche, si l'aéronef est dans la phase de descente ou d'approche avant atterrissage, le moteur tourne au ralenti, le taux de compression des compresseurs est relativement faible et de l'eau à l'état liquide ou solide peut arriver jusqu'à la chambre de combustion et éteindre la combustion d'un des brûleurs, voire de tous, la quantité de carburant délivré étant relativement faible. Ceci peut entraîner des conséquences graves.

C'est pourquoi les dispositifs de décharge des turboréacteurs sont en général équipés d'écopes mobiles qui peuvent pénétrer sous l'action d'organes de commande complexes, dans la veine primaire dans l'espace annulaire séparant le compresseur à basse pression du compresseur à haute pression. Cet espace annulaire se présentant axialement sous la forme d'un col de cygne, les particules d'eau qui, du fait de leur masse spécifique, circulent le long de la paroi externe de la veine primaire, sont piégés par les écopes et déviés vers la veine secondaire.

GB 2 259 328 dévoile un tel dispositif de décharge dans lequel les écopes sont actionnées par un dispositif de synchronisation disposé dans le carter intermédiaire afin de diriger l'air prélevé et les particules vers des tubes fixes qui l'évacuent dans la veine secondaire en aval des bras de support du moteur.

EP 0 407 297 prévoit dans les parois interne et externe du carter inter-veine des trappes actionnées en synchronisme et mobiles radialement vers l'extérieur.

EP 0 374 004 prévoit également dans la paroi externe de la veine primaire des trappes associées d'un dispositif d'écopage.

Dans tous ces dispositifs de décharge, les organes de commande des écopes et des trappes sont disposés dans le carter interveine et fonctionnent en synchronisme. Ces organes de commande, comportant un anneau de commande, des biellettes, des vérins hydrauliques et des câbles pour actionner des trappes ou écopes articulées, sont relativement complexes et sont en outre difficilement accessibles lors des opérations inévitables d'entretien et de maintenance.

La disposition de ces écopes ou trappes, et des organes de commande sur le carter intermédiaire nécessite que le carter intermédiaire comporte des moyens pour supporter les articulations de ces dispositifs, ce qui complique considérablement le carter intermédiaire, et son usinage.

Le but de l'invention est de permettre une simplification du carter intermédiaire.

Ce but est atteint selon l'invention par le fait que les moyens de décharge comportent des moyens de prélèvement d'air dans la veine primaire disposés en amont du carter intermédiaire et des moyens d'évacuation de l'air prélevé dans la veine secondaire en aval des bras de support, ces moyens comportant des conduits disposés autour du carter intermédiaire sous les plates-formes.

Ainsi, le carter intermédiaire selon l'invention ne comporte pas de moyens pour fixer des éléments mécaniques du dispositif de décharge, ni de trous dans ses flasques pour le passage de tubes et l'invention permet toutefois l'évacuation de l'air de décharge en aval des bras de support, ce qui évite les perturbations aérodynamiques au pied des bras de support et les pertes de performance du moteur.

L'invention permet donc une simplification et une diminution du coût du carter intermédiaire, et une meilleure transition des efforts, car les flasques du carter intermédiaire ne sont pas traversés par des tubes, sans surcroît de masse.

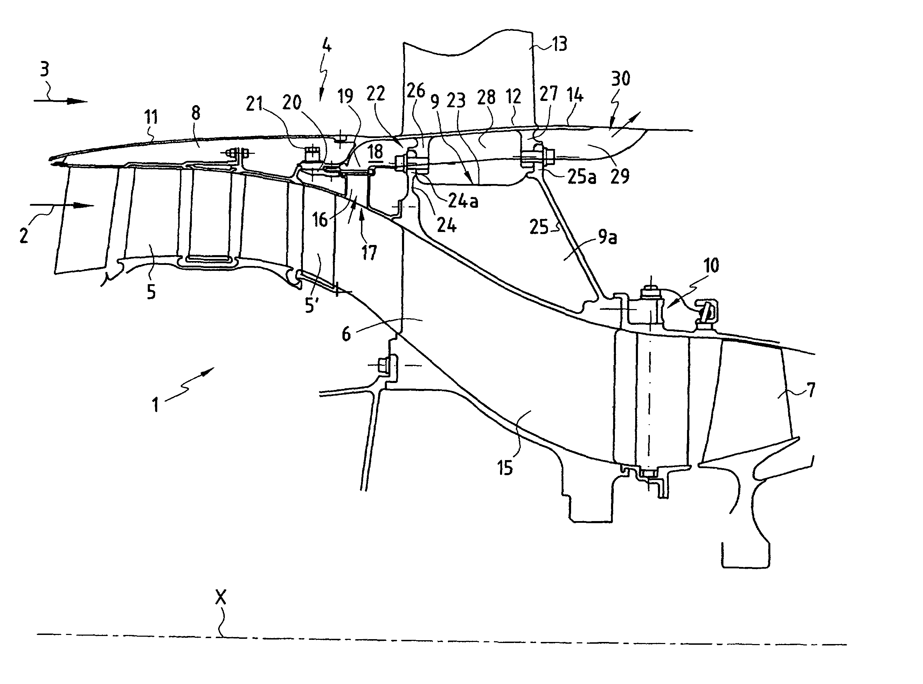

D'autres avantages et caractéristiques de l'invention ressortiront à la lecture de la description suivante faite à titre d'exemple et en référence au dessin annexé, dans lequel :
la figure unique est une demi-coupe longitudinale du carter intermédiaire et de la partie amont de la veine primaire, qui montre le dispositif de décharge d'un turboréacteur à double flux selon l'invention.

Comme illustré sur le dessin, un turboréacteur 1 à double flux d'axe X, comporte dans sa zone avant une soufflante non montrée sur le dessin, qui fournit de l'air à une veine d'air primaire 2 et à une veine d'air secondaire 3 annulaires et séparées par un carter interveine 4.

Dans la veine primaire 2 sont implantés successivement, d'amont en aval, un compresseur à basse pression 5, un conduit annulaire 6 ayant une section en forme de col de cygne, et un compresseur à haute pression 7 qui délivre de l'air comprimé à une chambre de combustion non montrée sur les dessins.

Le carter interveine 4 comprend, d'amont en aval, un becquet séparateur de flux 8 dont la paroi interne constitue le stator du compresseur à basse pression 5, un carter intermédiaire 9 structural qui comporte, dans sa zone radialement interne, le conduit annulaire 6 en forme de col de cygne, et le stator 10 du compresseur à haute pression 7.

La veine secondaire 3 est délimitée intérieurement par la paroi externe 11 du becquet 8, les plate-formes internes 12 de bras de support 13 du moteur qui traversent la veine secondaire 3, et de capots 14 entourant le stator 10 du compresseur à haute pression 7.

Le carter intermédiaire 9 présente à l'intérieur du conduit annulaire 6 une pluralité de bras radiaux 15 destinés à transmettre les efforts générés par la soufflante aux bras de support 13 via la partie annulaire 9a du carter intermédiaire 9 qui entoure le conduit annulaire 6.

Selon l'invention, le becquet séparateur 8 comporte dans sa région interne voisine du carter intermédiaire 9, et en aval de la dernière rangée d'aubes fixes 5' du compresseur à basse pression 5 un collecteur annulaire 16 qui communique avec la veine primaire par une pluralité d'orifices 17 ou par une multiperforation ménagée dans la paroi interne du becquet 8.

Ce collecteur 16 peut être mis en communication avec une pluralité de conduits radiaux 18 ménagés dans le becquet 8, par l'intermédiaire d'un anneau de commande 19 entraîné en rotation par un bras de manoeuvre 20 articulé autour d'un axe 21 susceptible d'être pivoté par une tige de vérin par exemple. Un déplacement alternatif de la tige de vérin provoque un pivotement alternatif de l'anneau de commande 19 autour de l'axe X entre deux positions extrêmes.

L'anneau de commande comporte une pluralité d'orifices qui, dans une position extrême de l'anneau de commande 19, sont en regard des orifices d'entrée des conduits radiaux 18 et qui dans l'autre position extrême de l'anneau de commande 19 sont obturés par une paroi interne annulaire du becquet 8 qui relie entre eux les orifices d'entrée des conduits radiaux 18. Ces conduits radiaux 18 sont en fait coudés vers l'aval et présentent des orifices de sortie 22 qui débouchent sous les plates-formes internes 12 des bras de support 13. Un débit d'air de décharge réglable par l'anneau de commande 19 peut ainsi être prélevé dans la veine primaire 2 et évacué par les conduits 18.

Comme on le voit sur le dessin, la paroi périphérique 23 du carter intermédiaire est disposée à distance des plates-formes internes 12. Les flasques radiaux 24 et 25 qui définissent les faces amont et aval de la partie radialement extérieure du carter intermédiaire 9 comportent des oreilles percées 24a, 25a situées radialement à l'extérieur de la paroi périphérique 23 et qui servent à la fixation par boulonnage de pattes radiales 26, 27 prévues sur les bras de support 13 et qui s'étendent radialement vers l'intérieur sous les plates-formes 12.

Les orifices de sortie 22 des conduits 18 débouchent sous les plates-formes 12 entre deux ensembles adjacents de pattes et d'oreilles 24a, 26.

Des tubes axiaux 28 sont fixés sous les plates-formes 12 ou à la périphérie du carter intermédiaire 9 en regard des orifices de sortie 22 des conduits 18 afin d'assurer la continuité des conduits d'évacuation de l'air de décharge.

Ces tubes axiaux 28 débouchent également en aval du carter intermédiaire 9 entre deux ensembles adjacents de pattes et d'oreilles 25a, 27, en regard de conduits 29 prévus sous le capot 14 entourant le stator 10 du compresseur à haute pression et qui débouchent par des orifices 30, en aval des bras de support 13 dans la veine secondaire 3.

## Revendications

1. Turboréacteur à double flux comportant entre la veine primaire (2) et la veine secondaire (3) un carter intermédiaire (9) structural disposé axialement entre un compresseur à basse pression (5) et un compresseur à haute pression (7), et des moyens de décharge permettant la dérivation d'une partie du flux gazeux délivré par le compresseur à basse pression (5) vers la veine secondaire (3), ledit carter intermédiaire (9) étant équipé à sa périphérie d'une pluralité de bras de support (13) présentant des plates-formes qui délimitent intérieurement la veine secondaire (3), **caractérisé par le fait que** les moyens de décharge comportant des moyens (16, 19) de prélèvement d'air dans la veine primaire (2) disposés en amont du carter intermédiaire (9) et des moyens d'évacuation de l'air prélevé dans la veine secondaire en aval des bras de support ces moyens comportant des conduits (28) disposés autour du carter intermédiaire (9) sous les plates-formes (12).

## Claims

1. Bypass turbojet comprising, between the primary duct (2) and the secondary duct (3), a structural intermediate casing (9) arranged axially between a low-pressure compressor (5) and a high-pressure compressor (7), and bleed-off means allowing some of the gaseous stream delivered by the low-pressure compressor (5) to be tapped off and led to the secondary duct (3), the said intermediate casing (9) being equipped at its periphery with a plurality of support arms (13) having platforms which internally delimit the secondary duct (3), **characterized in that** the bleed-off means comprise means (16, 19) for tapping air from the primary duct (2) which are arranged upstream of the intermediate casing (9) and means for removing the air tapped from the secondary duct downstream of the support arms, these means comprising conduits (28) arranged around the intermediate casing (9) under the platforms (12).

## Patentansprüche

1. Zweikreis-TL-Triebwerk, das zwischen der Primärstrombahn (2) und der Mantelstrombahn (3) ein Zwischengehäuse (9) des Aufbaus aufweist, welches axial zwischen einem Niederdruckkompressor (5) und einem Hochdruckkompressor (7) angeordnet ist, sowie Abblas-Mittel aufweist, die es ermöglichen, einen Teil des von dem Niederdruckkompressor (5) abgegebenen Gasstroms zu der Mantelstrombahn (3) hin umzuleiten, wobei dieses Zwischengehäuse (9) an seinem Außenumfang mit einer Vielzahl von Haltearmen (13) ausgestattet ist, die Plattformen aufweisen, die nach innen die Mantelstrombahn (3) begrenzen,
**dadurch gekennzeichnet,**
**dass** die Abblas-Mittel Mittel (16, 19) zur Entnahme von Luft aus der Primärstrombahn (2) enthalten, die vor dem Zwischengehäuse (9) angeordnet sind, sowie Mittel zum Abblasen der entnommenen Luft in die Mantelstrombahn hinter den Haltearmen enthalten, wobei diese Mittel aus Leitungen (28) bestehen, die um das Zwischengehäuse (9) herum unter den Plattformen (12) angeordnet sind.
